# EUROPEAN PATENT SPECIFICATION

(11) **EP 3 678 030 B1**
(45) Date of publication and mention of the grant of the patent: **09.03.2022**
(21) Application number: 18850390.8
(22) Date of filing: 22.08.2018
(51) Int. Cl.: G06F 16/00, G06N 99/00, G06F 16/22

(54) **DISTRIBUTED SYSTEM FOR EXECUTING MACHINE LEARNING, AND METHOD THEREFOR**
VERTEILTES SYSTEM ZUR AUSFÜHRUNG VON MASCHINENLERNEN UND VERFAHREN DAFÜR
SYSTÈME DISTRIBUÉ POUR EXÉCUTER UN APPRENTISSAGE MACHINE, ET PROCÉDÉ ASSOCIÉ

(30) Priority: 30.08.2017 CN 201710762586
(43) Date of publication of application: 08.07.2020
(73) Proprietor: The Fourth Paradigm (Beijing) Tech Co Ltd, Beijing 100085 (CN)
(72) Inventor: DAI, Wenyuan, Beijing 100085 (CN); YANG, Qiang, Beijing 100085 (CN); CHEN, Yuqiang, Beijing 100085 (CN); LIU, Yiming, Beijing 100085 (CN); SHI, Guangchuan, Beijing 100085 (CN)
(74) Representative: Hübner, Gerd
(86) International application number: PCT/CN2018/101693
(87) International publication number: WO 2019/042199

(56) References cited:
- CN-A- 102 629 219
- CN-A- 105 956 166
- CN-A- 106 156 810
- CN-A- 106 779 093
- CN-A- 107 729 353
- US-A1- 2015 234 956
- MU LI ? + ET AL: "Scaling Distributed Machine Learning with the Parameter Server", USENIX, USENIX, THE ADVANCED COMPUTING SYSTEMS ASSOCIATION , 6 October 2014 (2014-10-06), pages 595-610, XP061024674, Retrieved from the Internet: URL:https://www.usenix.org/sites/default/f iles/osdi14_full_proceedings.pdf [retrieved on 2014-10-06]
- Mu Li: "Scaling Distributed Machine Learning with System and Algorithm Co-design Thesis Committee", , 1 February 2017 (2017-02-01), XP055406446, Retrieved from the Internet: URL:https://www.cs.cmu.edu/~muli/file/mu-t hesis.pdf [retrieved on 2017-09-13]

## Description

### TECHNICAL FIELD

The exemplary embodiments of the present disclosure generally relate to a field of artificial intelligence, and more particularly to a distributed system for executing machine learning and a method of executing the machine learning using the distributed system.

### BACKGROUND

With the rapid growth of data scale, machine learning is widely used in various fields to mine value of data. However, in order to execute the machine learning, a memory of a general physical machine has been far from sufficient. For this reason, it is often required in practice for a distributed machine learning system to complete training or corresponding prediction of a machine learning model. In an existing distributed machine learning system, the training or the prediction regarding the same machine learning model is typically executed in parallel by a plurality of computing devices, parameters of the machine learning model are stored by a parameter server, and reading and writing of the parameters of the machine learning model by respective computing device are supported.

The parameter server has advantages of supporting massive dimensions, high concurrency, load balancing, etc., but it also has disadvantages of large memory occupation, large amount of computation, and large network bandwidth occupation, etc. Generally, one parameter server is only used to store the parameters of one machine learning model. If it is intended to execute the training and/or the prediction regarding a plurality of machine learning models at the same time, it is required for the parameter server to store the parameters of the plurality of machine learning models, thus storage overhead will also grow linearly.

MU LI ET AL: "Scaling Distributed Machine Learning with the Parameter Server",USENIX, USENIX, THE ADVANCED COMPUTING SYSTEMS ASSOCIATION, 6 October 2014 (2014-10-06), pages 595-610,Retrieved from the Internet:URL:https://www.usenix.org/sites/default/ files/osdi14_full_proceedings.pdf discloses a parameter server framework for distributed machine learning problems. Both data and workloads are distributed over worker nodes, while the server nodes maintain globally shared parameters, represented as dense or sparse vectors and matrices.

### SUMMARY

The object of the invention is solved by the features of the independent claims. Further embodiments are the subject-matter of the dependent claims.

An exemplary embodiment of the present disclosure is to provide a distributed system for performing machine learning and a method thereof to solve a problem that the storage overhead of the parameter server is excessive when operations of a plurality of machine learning models are simultaneously performed.

According to an exemplary embodiment of the present disclosure, there is provided a distributed system for executing machine learning, comprising: a parameter server configured to maintain parameters of a plurality of machine learning models, wherein the parameters have a form of a key-value pair, and the parameter server saves a plurality of key-value pairs having a same key in a form in which a single key corresponds to a plurality of values; and a plurality of computing devices configured to execute an algorithm regarding the plurality of machine learning models in parallel, wherein the algorithm is a training algorithm regarding the machine learning model or a prediction algorithm regarding the machine learning model;
wherein the parameter server provides the computing device with the parameters that the computing device needs to read in order to execute the training algorithm regarding the machine learning model, so as for the computing device to execute the training algorithm using the read parameters, and the parameter server updates the parameters of the machine learning model according to a result of executing the training algorithm by the computing device;
or, the parameter server provides the computing device with the parameters that the computing device needs to read in order to execute the prediction algorithm regarding the machine learning model, so as for the computing device to execute the prediction algorithm using the read parameters;
or, the parameter server provides the computing device with the parameters that the computing device needs to read in order to execute the training algorithm regarding the machine learning model, so as for the computing device to execute the training algorithm using the read parameters, and the parameter server updates the parameters of the machine learning model according to the result of the computing device executing the training algorithm; and the parameter server provides the computing device with the parameters that the computing device needs to read in order to execute the prediction algorithm regarding the machine learning model, so as for the computing device to execute the prediction algorithm using the read parameters.

According to another exemplary embodiment of the present disclosure, there is provided a method of executing machine learning using a distributed system, wherein a parameter server of the distributed system is configured to maintain parameters of a plurality of machine learning models, wherein the parameters have a form of a key-value pair, and the parameter server saves a plurality of key-value pair having a same key in a form in which a single key corresponds to a plurality of values; and a plurality of computing devices in the distributed system are configured to execute an algorithm regarding the plurality of machine learning models in parallel, wherein the algorithm is a training algorithm regarding the machine learning model or a prediction algorithm regarding the machine learning model, the method comprises following steps executed by the parameter server:
the parameter server provides the computing device with the parameters that the computing device needs to read in order to execute the training algorithm regarding the machine learning model, so as for the computing device to execute the training algorithm using the read parameters, and the parameter server updates the parameters of the machine learning model according to a result of executing the training algorithm by the computing device;
or, the parameter server provides the computing device with the parameters that the computing device needs to read in order to execute the prediction algorithm regarding the machine learning model, so as for the computing device to execute the prediction algorithm using the read parameters;
or, the parameter server provides the computing device with the parameters that the computing device needs to read in order to execute the training algorithm regarding the machine learning model, so as for the computing device to execute the training algorithm using the read parameters, and the parameter server updates the parameters of the machine learning model according to the result of the computing device executing the training algorithm; and the parameter server provides the computing device with the parameters that the computing device needs to read in order to execute the prediction algorithm regarding the machine learning model, so as for the computing device to execute the prediction algorithm using the read parameters.

According to another exemplary embodiment of the present disclosure, there is provided a parameter server, wherein the parameter server comprises at least one processor and at least one computer-readable storage medium storing executable instructions thereon, wherein the executable instructions, when executed by the processor, implement the method as described above.

According to another exemplary embodiment of the present disclosure, there is provided a computer-readable storage medium storing a computer program thereon, wherein the computer program, when executed by a parameter server, implements the method as described above.

In the distributed system for performing the machine learning and a method thereof according to an exemplary embodiment of the present disclosure, the parameters of a plurality of machine learning models are maintained by the parameter server, and the parameter server saves a plurality of key-value pairs having the same key in a form in which a single key corresponds to a plurality of values, thus, it is possible to effectively reduce the storage overhead of the parameter server while performing the training and/or prediction regarding a plurality of machine learning models simultaneously. Furthermore, the amount of calculation of the parameter server and network transmission overhead may be effectively reduced.

Additional aspects and/or advantages of general concept of the present disclosure will be set forth in part in the following description, and another part will be apparent from the description, or may be learned through the practice of the general concept of the present disclosure.

### BRIEF DESCRIPTION OF THE DRAWINGS

The above and other objects and features of the exemplary embodiments of the present disclosure will become more apparent from the following description taken in conjunction with accompanying drawings in which the embodiments are exemplarily illustrated.
FIG. 1 illustrates a block diagram of a distributed system for executing machine learning according to an exemplary embodiment of the present disclosure;
FIG. 2 illustrates an example of saving parameters of a machine learning model according to an exemplary embodiment of the present disclosure;
FIG. 3 illustrates a block diagram of the distributed system for executing the machine learning according to another exemplary embodiment of the present disclosure;
FIG. 4 illustrates a block diagram of the distributed system for executing the machine learning according to another exemplary embodiment of the present disclosure;
FIG. 5 illustrates an example of a client interacting with an algorithm regarding the machine learning model, according to an exemplary embodiment of the present disclosure;
FIG. 6 illustrates a flowchart of a method of executing the machine learning using the distributed system, according to an exemplary embodiment of the present disclosure;
FIG. 7 illustrates a flowchart of a method of executing the machine learning using the distributed system, according to another exemplary embodiment of the present disclosure;
FIG. 8 illustrates a flowchart of a method in which a client requests, from a server end, the parameters that a computing device needs to read in order to execute an algorithm regarding the machine learning model, according to an exemplary embodiment of the present disclosure;
FIG. 9 illustrates a flowchart of a method in which the client acquires, from the server end, the parameters that the computing device needs to read, according to an exemplary embodiment of the present disclosure.

### DETAILED DESCRIPTION

The embodiments of the present disclosure will now be described in detail, and examples of the embodiments are illustrated in the accompanying drawings, in which the same reference number always refers to the same part. The embodiments are described below by referring to the figures, in order to explain the present disclosure. It needs to be explained here that "and/or" appearing in the present disclosure means that three juxtaposition cases are included. For example, "including A and/or B" means the following three juxtaposition cases: (1) including A; (2) including B; (3) including A and B. For another example, "executing step one and/or step two" indicates the following three juxtaposition cases: (1) executing step one; (2) executing step two; (3) executing step one and step two.

A distributed system for executing machine learning involved in an exemplary embodiment of the present disclosure may include a parameter server and a plurality of computing devices, wherein the parameter server maintains parameters of a plurality of machine learning models by interacting with respective computing device, and the plurality of computing devices execute training and/or prediction regarding the plurality of machine learning models in parallel. It should be noted that the computing device and/or the parameter server referred to herein are respectively defined by processes performed thereby or functions implemented thereby, and may either indicate a physical entity or may indicate a virtual entity. For example, the computing device may either indicate an actual computing machine, or indicate a logical entity deployed on the computing machine. Likewise, the parameter server may either indicate the actual computing machine, or be deployed as one or more logical entities on the same or different computing machine with the computing device.

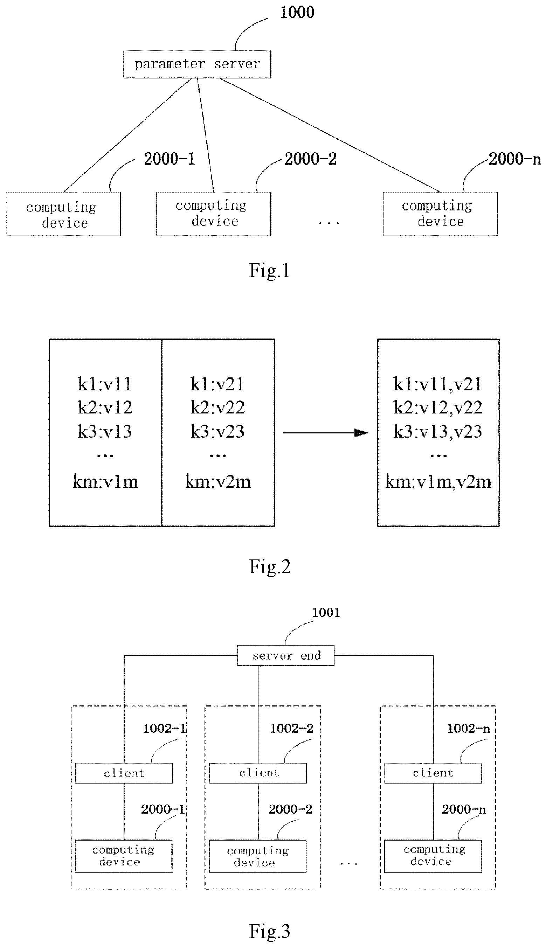

FIG. 1 illustrates a block diagram of the distributed system for executing the machine learning, according to an exemplary embodiment of the present disclosure. Referring to FIG. 1, the distributed system for executing the machine learning according to an exemplary embodiment of the present disclosure may include a parameter server 1000 and a plurality of computing devices 2000 (for example, 2000-1, 2000-2, ..., 2000-n ( Where n is an integer greater than 1)).

In particular, the parameter server 1000 is configured to maintain the parameters of the plurality of machine learning models, wherein the parameters have a form of a key-value pair. Here, the machine learning model may be regarded as a function regarding features of a machine learning sample, which can be gradually converge to a parameter optimal solution of the function by continuously iterative training for all machine learning samples. Accordingly, a key in one key-value may correspond to identity of one feature, and a value may correspond to the value of the parameter associated with the feature among the parameters of the function.

The plurality of computing devices 2000 are configured to execute an algorithm regarding the plurality of machine learning models in parallel, wherein the algorithm is a training algorithm regarding the machine learning model or a prediction algorithm regarding the machine learning model. In particular, the parameter server 1000 provides the computing device 2000 with the parameters that the computing device 2000 needs to read in order to execute the training algorithm regarding the machine learning model, so as for the computing device 2000 to execute the training algorithm using the read parameters, and the parameter server 1000 updates the parameters of the machine learning model according to a result of executing the training algorithm by the computing device 2000; and/or, the parameter server 1000 provides the computing device 2000 with the parameters that the computing device 2000 needs to read in order to execute the prediction algorithm regarding the machine learning model, so as for the computing device 2000 to execute the prediction algorithm using the read parameters.

It should be noted that each computing device 2000 may perform at least one algorithm regarding the machine learning model. As an example, different computing devices 2000 may execute the same algorithm regarding the machine learning model (i.e. the training algorithms regarding the same machine learning model or the predication algorithm regarding the same machine learning model) with respect to respective data records (here, different data records for different computing devices 2000 are different); different computing devices 2000 may also execute different algorithms regarding the machine learning model.

As an example, the parameter server 1000 saves a plurality of key-value pairs having a same key in a form in which a single key corresponds to a plurality of values. Specifically, each machine learning model corresponds to a set of key-value pairs. In this set of key-value pairs, the keys of different key-value pairs are different, each key corresponds to its own value, and the parameter server 1000 merges and saves the key-value pairs corresponding to different machine learning models with the same key as a form in which a single key corresponds to a plurality of values, when saving the parameters of a plurality of machine learning models, thereby avoiding that the storage overhead grows linearly when the parameters of the plurality of machine learning models are stored simultaneously. As illustrated in FIG. 2, the machine learning model A corresponds to a set of key-value pairs, at least including keys k1, k2, k3, ..., km respectively corresponding to values v11, v12, v13, ..., v1m; the machine learning model B corresponds to another set of key-value pairs, at least including the keys k1, k2, k3, ..., km respectively corresponding to values v21, v22, v23, ..., v2m, wherein m is an integer greater than 1, it can be seen that at least a part of key-value pairs among the two sets of key-value pairs have exactly the same key, and thus, according to an exemplary embodiment of the present disclosure, the parameter server 1000 may save the at least a part of key-value pairs having the same key in the form in which a single key corresponds to a plurality of values, for example, save as a form in which the key k1 corresponds to both the values v11 and v21.

As an example, the parameter server 1000 may be deployed on a single computing machine; alternatively, the parameter server 1000 may be deployed on a plurality of computing machines simultaneously.

FIG. 3 illustrates a block diagram of the distributed system for executing the machine learning according to another exemplary embodiment of the present disclosure. As illustrated in FIG. 3, the parameter server 1000 may have a distributed structure in which the parameter server 1000 may include at least one server end 1001 (only a case of including one server end 1001 is illustrated in FIG. 3) and a plurality of clients 1002 (for example, 1002-1, 1002-2, ..., 1002-n), wherein the client 1002 is in one-to-one correspondence with the computing device 2000, and the client 1002 and the computing device 2000 in correspondence are integrated. Specifically, the client 1002-1 and the computing device 2000-1 in correspondence may be integrated on a same virtual machine or physical machine, and the client 1002-2 and the computing device 2000-2 in correspondence may be integrated on the same virtual machine or physical machine, and so on, the client 1002-n and the computing device 2000-n in correspondence may be integrated on the same virtual machine or physical machine.

The at least one server end 1001 is configured to save the parameters of the plurality of machine learning models. Specifically, when there is a single server end 1001, the server end 1001 saves the parameters of the plurality of machine learning models; when there are a plurality of server ends 1001, each server end 1001 separately saves a part of the parameters of the plurality of machine learning models, and the parameters saved by different server end 1001 have no intersection. As an example, when there are a plurality of server ends 1001, the key-value pairs having the same key may be saved in the same parameter server end 1001, so that it is possible for the server end 1001 to save a plurality of key-value pairs having the same key in the form in which a single key corresponds to a plurality of values.

Each client 1002 is configured to communicate a parameter operation instruction of the parameters involved in the algorithm regarding at least one machine learning model with one or more server ends 1001; the computing device 2000 corresponding to the each client 1002 is configured to execute the algorithm regarding the at least one machine learning model. As a preferred example, in the parameter operation instruction, the same key can be compressed and/or merged, which avoids repeated transmission of the same key, thereby effectively reducing network overhead of communicating the parameter operation instruction between the client 1002 and the server end 1001. Furthermore, when the server end 1001 saves a plurality of key value pairs having the same key in a form in which a single key corresponds to a plurality of values, it is also possible to avoid repeatedly searching for the same key after receiving the parameter operation instruction, thereby effectively reducing the amount of calculation for the server end 1001 to find the involved parameter after receiving the parameter operation instruction.

As an example, the same keys in the parameter operation instruction may be merged by a way of bucketing or by the way of sorting. It should be understood that the same keys in the parameter operation instruction may also be merged in other ways, which are not limited in the present disclosure.

As an example, the same keys in the parameter manipulation instruction may be directly compressed. As another example, the parameter operation instruction communicated between the client 1002 and the server end 1001 may also be the parameter operation instruction in a compressed form, thereby realizing that the same keys in the parameter operation instruction are compressed. The same data may be implicitly merged by a compression algorithm, for example, various suitable compression algorithms such as a Snappy compression algorithm and a LZ4 compression algorithm, etc. may be used.

Furthermore, as an example, the same keys in the parameter operation instruction may be merged first, and then the parameter operation instruction in which the same keys are merged may be compressed again, thereby realizing that the same keys in the parameter operation instruction are merged and compressed.

As an example, each client 1002 may receive parameter operation request for the parameters involved in the algorithm regarding the at least one machine learning model from the corresponding computing device 2000, respectively generate the parameter operation instruction corresponding to the parameter operation request for one or more server ends 1001 that save the parameters, and transmit the generated parameter operation instructions to the one or more server ends 1001 respectively.

Furthermore, as an example, each client 1002 receives, from the one or more server ends 1001, the parameter operation instruction corresponding to a parameter operation result of the parameters, generates the parameter operation result corresponding to each of the parameter operation requests based on the received parameter operation instruction, and transmits the generated parameter operation result to the corresponding computing device 2000.

As an example, the parameter operation request may include a pull operation request and/or a push operation request. Specifically, the pull operation request is used for requesting to read the parameters of the machine learning model, for example, the pull operation request may specify the machine learning model requested to be read and the keys of the parameters requested to be read. Correspondingly, the parameter operation result corresponding to the pull operation request is specific content of the parameters requested to be read. The push operation request is used for requesting to update the parameters of the machine learning model, for example, the push operation request may specify the machine learning model requesting to be updated, the keys of the parameters requesting to be updated, and a specific update operation for the values corresponding to the keys. Accordingly, the parameter operation result corresponding to the push operation request is a notification that the parameter server has completed the update operation.

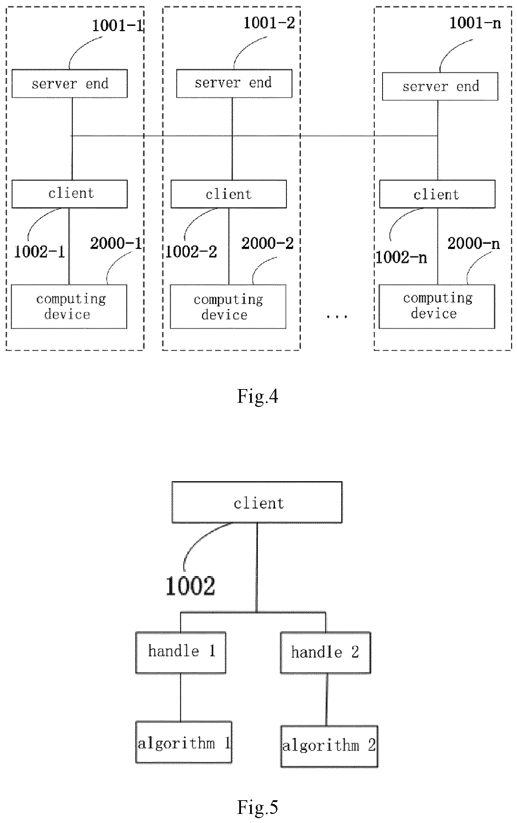

As an example, each of all or a portion of the server end 1001 included in the parameter server 1000 may be integrated with a corresponding one computing device 2000. FIG. 4 illustrates a block diagram of the distributed system for executing the machine learning according to another exemplary embodiment of the present disclosure. As illustrated in FIG. 4, the server 1001, the client 1002 and the computing device 2000 may be in one-to-one correspondence, and the server 1001, the client 1002, and the computing device 2000 in correspondence may be integrated. Specifically, the server end 1001-1, the client 1002-1, and the computing device 2000-1 in correspondence may be integrated on the same virtual machine or physical machine, and the server end 1002-1, the client 1002-2, and the computing device 2000-2 in correspondence may be integrated on the same virtual machine or physical machine, and so on, the server end 1001-n, the client 1002-n and the computing device 2000-n may be integrated on the same virtual machine or physical machine.

It should be noted that in the distributed system for executing the machine learning according to another exemplary embodiment of the present disclosure, in order to execute the algorithm regarding the machine learning model, each computing device 2000 may locally use the parameters saved by the corresponding client 1001 integrated therewith, and may also interact with other clients 1001 to obtain the parameters required to execute the algorithm regarding the machine learning model when the parameters maintained by the other clients 1001 are needed to be used.

As an example, parameter server 1000 may store the key-value pair use a mapping data structure. As an example, when the parameter server 1000 includes at least one server end 1001 and a plurality of clients 1002, each server end 1001 may store the key-value pair use the mapping data structure.

As an example, the parameter server 1000 can store the key-value pair in accordance with a data shard, thereby improving the efficiency of the parameter server 1000 for reading and writing parameters. As an example, when the parameter server 1000 includes at least one server end 1001 and a plurality of clients 1002, each server end 1001 may store the key-value pair in accordance with the data shard. Moreover, as an example, the mapping data structure can be used for storage for the key-value pair within each data shard.

As an example, a separate handle is used for interaction between the client 1002 and the corresponding computing device 2000 for each algorithm. Referring to FIG. 5, the algorithm regarding the machine learning model executed by the computing device 2000 may not be directly interact with the corresponding client 1002. Each algorithm may interact with the corresponding client 1002 through one separate handle, for example, each algorithm may transmit the parameter operation request, such as the pull operation request, the push operation request, and a wait operation request, etc., to the client 1002 through a corresponding handle, and the client 1002 also sends the parameter operation result corresponding to the parameter operation request to the corresponding handle, and the algorithm may obtain the parameter operation result from the handle. Since the algorithm regarding the machine learning model only needs to interact with the handle, in terms of the use of the distributed system, the algorithms regarding the machine learning model performed by the same computing device 2000 are relatively independently performed, have no effect, and are purely transparent between each other.

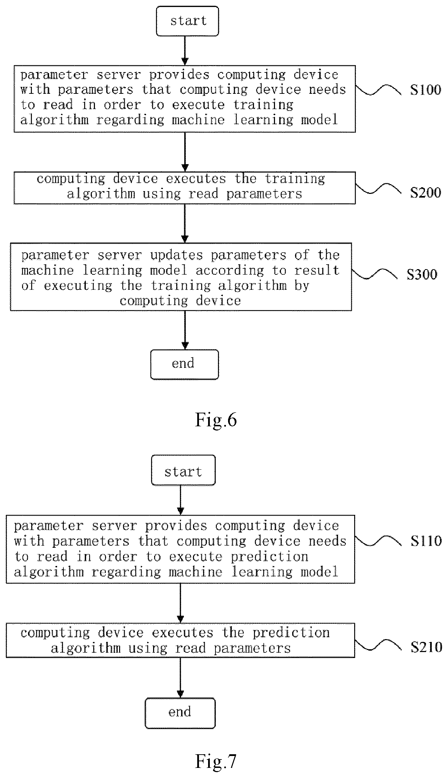

FIG. 6 illustrates a flowchart of a method of executing the machine learning using the distributed system, according to an exemplary embodiment of the present disclosure. The steps involved in the method may be performed by the computing device and the parameter server (e.g., the parameter server 1000; or the server end 1001 and the client 1002) in the previously described distributed system, for example, by the computing device and the parameter server according to a preset configuration, wherein the parameter server in the distributed system is configured to maintain the parameters of a plurality of machine learning models, wherein the parameters have a form of a key-value pair; and a plurality of computing devices in the distributed system are configured to execute the training algorithm regarding the plurality of machine learning models in parallel.

Referring to FIG. 6, in step S100, the parameter server provides the computing device with the parameters that the computing device needs to read in order to execute the training algorithm regarding the machine learning model.

In step S200, the computing device executes the training algorithm using the read parameters.

In step S300, the parameter server updates the parameters of the machine learning model according to a result of executing the training algorithm by the computing device.

As an example, the parameter server may save a plurality of key-value pairs having the same key in a form in which a single key corresponds to a plurality of values.

It should be understood by those skilled in the art that the computing device needs to obtain the data record as the machine learning sample locally or externally in the process of training the machine learning model with respect to the machine learning sample. Furthermore, in the process of training the machine learning model with respect to a large number of machine learning samples, it is often necessary to repeat steps S100 to S300 multiple times. The operations involved in steps S100 to S300 have been described in detail with reference to FIGS. 1 to 5, and relevant details will not be described again herein.

FIG. 7 illustrates a flow chart of a method of executing the machine learning using the distributed system according to another exemplary embodiment of the present disclosure. The steps involved in the method may be performed by the computing device and the parameter server (e.g., the parameter server 1000; or the server end 1001 and the client 1002) in the previously described distributed system, for example, by the computing device and the parameter server according to a preset configuration, wherein the parameter server in the distributed system is configured to maintain the parameters of a plurality of machine learning models, wherein the parameters have a form of a key-value pair; and a plurality of computing devices in the distributed system are configured to execute the prediction algorithm regarding the plurality of machine learning models in parallel.

Referring to FIG. 7, in step S110, the parameter server provides the computing device with the parameters that the computing device needs to read in order to execute the prediction algorithm regarding the machine learning model.

In step S210, the computing device executes the prediction algorithm using the read parameters.

As an example, the parameter server may save a plurality of key-value pairs having the same key in a form in which a single key corresponds to a plurality of values.

It should be understood by those skilled in the art that it needs to acquire the data record for prediction locally or externally in the process of perform the prediction (or the test) of the machine learning model with respect to the data record. Furthermore, in the process of perform the prediction of the machine learning model with respect to a large number of data records, it is often necessary to repeat steps S100 and S210 multiple times. The operations involved in steps S110 and S210 have been described in detail with reference to FIGS. 1 to 5, and relevant details will not be described again herein.

Further, it should be understood that the methods of executing the machine learning using the distributed system according to an exemplary embodiment of the present disclosure illustrated in FIGS. 6 and 7 may be simultaneously performed.

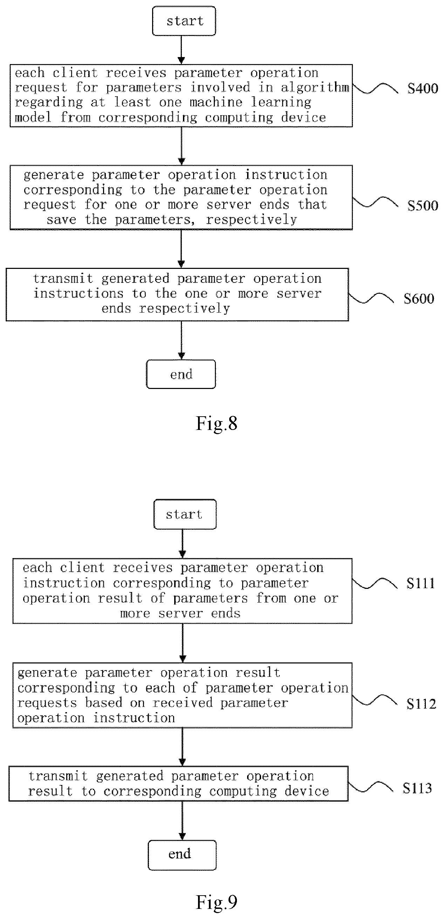

FIG. 8 illustrates a flowchart of a method in which the client requests, from the server end, the parameters that the computing device needs to read in order to execute the algorithm regarding the machine learning model, according to an exemplary embodiment of the present disclosure. The method may be performed before step S100 and/or step S110.

Here, the parameter server may include at least one server end and a plurality of clients, wherein the client is in one-to-one correspondence with the computing device, and the client and the computing device in correspondence are integrated, wherein the at least one server end is configured to save the parameters of the plurality of machine learning models; each client is configured to communicate a parameter operation instruction of the parameters involved in the algorithm regarding at least one machine learning model with one or more server ends, wherein the computing device corresponding to the each client is configured to execute the algorithm regarding the at least one machine learning model.

Referring to FIG. 8, in step S400, each client receives a parameter operation request for the parameters involved in the algorithm regarding at least one machine learning model from a corresponding computing device.

According to an exemplary embodiment of the present disclosure, each computing device may request to acquire and/or update the parameters of the algorithm from its corresponding client in execution of the machine learning algorithm, here, the parameters are distributedly stored in one or more server ends. To this end, after receiving any parameter operation request, the client may split it into a parameter operation request portion corresponding to each server end, and saves the split portion in a corresponding queue. For example, the corresponding queue may be set for each server end.

In step S500, a parameter operation instruction corresponding to the parameter operation request is respectively generated for one or more server ends that save the parameters.

As an example, the parameter operation request based on which the client generates the parameter operation instruction each time may be respective portion cached in the queue, that is, at least one parameter operation request portion for the corresponding server end received from the corresponding computing device, from the last time the client generated the parameter operation instruction until the client generates the parameter operation instruction this time. As an example, the operation of generating the parameter operation instruction may be performed once every predetermined time period; or the operation of generating the parameter operation instruction may be performed once whenever a predetermined number of parameter operation requests are received. Further, as an example, timing of performing the operation of generating the parameter operation instruction each time may be determined according to a network condition and/or an operation state of the server end. It should be understood that the timing of performing the operation of generating the parameter operation instruction each time may also be determined according to other predetermined strategies.

Since the parameter operation instructions corresponding to respective server ends are respectively generated based on respective queues, considering that the parameter operation requests related to at least one machine learning algorithm are cached in each queue, correspondingly generated parameter operation instructions may be based on the same or different type of parameter operation requests, wherein the parameter operation requests may target the same or different machine learning algorithms. Accordingly, as an example, in the generated parameter operation instructions, the same keys may be compressed and/or merged.

In step S600, the generated parameter operation instructions are respectively transmitted to the one or more server ends.

FIG. 9 illustrates a flowchart of a method in which the client acquires, from the server end, the parameters that the computing device needs to read, according to an exemplary embodiment of the present disclosure. As an example, the method may correspond to step S100 and/or step S110, and is performed correspondingly after step S600. Specifically, after receiving the parameter operation instruction transmitted by the each client in step S600, the one or more server ends perform corresponding operations on the parameters in response to the received parameter operation instruction, and return the parameter operation instruction corresponding to a parameter operation result of the parameters, wherein in the returned parameter operation instruction, the same keys may be compressed and/or merged.

Referring to FIG. 9, in step Sill, the each client receives the parameter operation instruction corresponding to the parameter operation result of the parameters from the one or more server ends.

In step S112, the parameter operation result corresponding to each of the parameter operation requests is generated based on the received parameter operation instruction.

In step S113, the generated parameter operation result is transmitted to the corresponding computing device.

For example, the client may receive a pull operation request 1 regarding the algorithm A from the corresponding computing device (the keys of the involved parameters are k1-k100) and a push operation request 2 regarding the algorithm B (the keys of the involved parameter are k20- K80), wherein the parameters having keys of k1-k50 are saved on the server end 1001-1, and the parameter having the keys of k51-k100 are saved on the server end 1001-2. According to an exemplary embodiment of the present disclosure, in the case that the parameter operation instructions are generated for the above two parameter operation requests in accordance with a predetermined strategy, the client 1002 may first determine the server end 1001-1 and the server end 1001-2 according to the parameters involved in the pull operation request 1 and the push operation request 2, and then generate, with respect to the server end 1001-1, a parameter operation instruction C regarding the parameters having the keys of k1-k50, corresponding to the pull operation request 1 and the push operation request 2 (here, the parameter operation instruction C may indicate performing a pull operation on the parameters having the keys of k1-k50 of the machine learning model corresponding to the algorithm A, and performing a push operation on the parameters having the keys of k20-k50 of the machine learning model corresponding to the algorithm B), and in the parameter operation instruction, the same keys k20-k50 are merged and/or compressed; Correspondingly, the client 1002 generates, with respect to the server end 1001-2, a parameter operation instruction D regarding the parameters having the keys of k51-k100, corresponding to the pull operation request 1 and the push operation request 2 (here, the parameter operation instruction D may indicate performing the pull operation on the parameters having the keys of k51-k100 of the machine learning model corresponding to the algorithm A, and performing the push operation on the parameters having the keys of k51-k80 of the machine learning model corresponding to the algorithm B), and in the parameter operation instruction, the same keys k51-k80 are merged and/or compressed. The server end 1001-1 and the server end 1001-2 respectively perform corresponding operations on the corresponding parameters in response to the received parameter operation instructions C and D, and return a parameter operation instruction C' (here, the parameter operation instruction C' may indicate the result of the pull operation on the parameters having the keys of k1-k50 of the machine learning model corresponding to the algorithm A, and the result of the push operation on the parameters having the keys of k20-k50 of the machine learning model corresponding to the algorithm B) and the parameter operation instruction D' (here, the parameter operation instruction D' may indicate the result of the pull operation on the parameters having the keys of k51-k100 of the machine learning model corresponding to the algorithm A, and the result of the push operation on the parameters having the keys of k51-k80 of the machine learning model corresponding to the algorithm B), wherein, in the parameter operation instructions C' and D', the same keys are combined and/or compressed. The client respectively generates parameter operation results 1' (i.e., the result of the pull operation on the parameters having the keys of k1-k100 of the machine learning model corresponding to the algorithm A) and 2' (i.e., the result of the push operation on the parameters having the keys of k20-k80 of the machine learning model corresponding to the algorithm B) corresponding to the pull operation request 1 and the push operation request 2 based on the received parameter operation instructions C' and D'. Here, it should be noted that the parameter operation requests participating in the merging may come not only from different algorithms but also from the same algorithm. In addition, the merging and/or compression of the same keys may also be performed within each parameter operation request.

The distributed system for performing the machine learning and the method thereof according to an exemplary embodiment of the present disclosure can effectively reduce the storage overhead of the parameter server while performing the training and/or prediction on a plurality of machine learning models simultaneously. Further, the amount of calculation of the parameter server and the network transmission overhead can be effectively reduced.

The distributed system for performing the machine learning and the method thereof according to an exemplary embodiment of the present disclosure are particularly applicable to a case that there are at least partially overlapping keys among the parameters of a plurality of machine learning models that are simultaneously trained while tuning of model parameters, execution of a machine learning task by a multi-user shared cluster, and the like.

It should be understood that the parameter server, the computing device, or a constituent part such as a device or a unit constituting them in a distributed system according to an exemplary embodiment of the present disclosure may be respectively configured as software, hardware, firmware, or any combination thereof that performs a specific function. For example, these constituent parts may correspond to dedicated integrated circuits, may also correspond to pure software codes, and may also correspond to modules in which the software and the hardware are combined. When they are implemented in the software, the firmware, the middleware or the microcode, program codes or code segments for performing a corresponding operation may be stored in a computer readable medium, such as a storage medium, such that a processor may perform the corresponding operation by reading and executing the corresponding program codes or code segments. Moreover, one or more functions implemented by these constituent parts may also be performed collectively by components in a physical entity apparatus (e.g., a computing machine, etc.).

For example, according to an exemplary embodiment of the present disclosure, there is provided a parameter server including at least one processor and at least one computer-readable storage medium storing executable instructions thereon, wherein the executable instructions, when executed by the processor, implement the method described in this disclosure.

According to another exemplary embodiment of the present disclosure, there is also provided a computer-readable storage medium storing a computer program thereon, wherein the computer program, when executed by the parameter server, implements any method as described in the above embodiments.

It should be noted that the distributed system according to an exemplary embodiment of the present disclosure may implement corresponding functions completely depend on the operation of a computer program, that is, each component corresponds to each step in functional structure of the computer program, so that the entire system is called by a special software package (for example, a lib library) to implement the corresponding functions.

While some exemplary embodiments of the present disclosure have been represented and described, it should be understood by those skilled in the art that modifications to these embodiments may be made without departing from the scope of the present disclosure as defined by the claims

## Claims

1. A distributed system for executing machine learning, comprising:
a parameter server (1000) configured to maintain parameters of a plurality of machine learning models, wherein the parameters have a form of a key-value pair, each of the machine learning model corresponds to a set of key-value pairs in which keys of different key-value pairs are different; and when the parameter server (1000) is saving the parameters of the plurality of machine learning models, the parameter server (1000) saves a plurality of key-value pairs having a same key in a form in which a single key corresponds to a plurality of values, so as to merge and save the plurality of key-value pairs corresponding to different machine learning models with the same key as a form in which a single key corresponds to a plurality of values; and
a plurality of computing devices (2000-1, 2000-2, ... , 2000-n) configured to execute an algorithm regarding the plurality of machine learning models in parallel, wherein the algorithm is a training algorithm regarding the machine learning model or a prediction algorithm regarding the machine learning model;
wherein the parameter server (1000) provides the computing device with the parameters that the computing device needs to read in order to execute the training algorithm regarding the machine learning model, so as for the computing device to execute the training algorithm using the read parameters, and the parameter server (1000) updates the parameters of the machine learning model according to a result of executing the training algorithm by the computing device;
and/or, the parameter server (1000) provides the computing device with the parameters that the computing device needs to read in order to execute the prediction algorithm regarding the machine learning model, so as for the computing device to execute the prediction algorithm using the read parameters.

2. The distributed system according to claim 1, **characterized in that** the parameter server (1000) comprises at least one server end (1001) and a plurality of clients (1002-1, 1002-2, ... , 1002-n), wherein the client (1002) is in one-to-one correspondence with the computing device, and the client (1002) and the computing device in correspondence are integrated,
wherein the at least one server end (1001) is configured to save the parameters of the plurality of machine learning models; each client (1002) is configured to communicate a parameter operation instruction of the parameters involved in the algorithm regarding at least one machine learning model with one or more server ends (1001-1, 1001-2, ... , 1001-n); the computing device corresponding to the each client (1002) is configured to execute the algorithm regarding the at least one machine learning model,
wherein, in the parameter operation instruction, the same keys are compressed, or are merged, or are compressed and merged.

3. The distributed system according to any one of claims 1-2, **characterized in that**,
each client (1002) is configured to split a parameter operation request of a corresponding computing device into parameter operation request portions corresponding to respective server end (1001) after receiving the parameter operation request, and save the split respective portion in a corresponding queue; wherein, the corresponding queue is set for each server end (1001);
the each client (1002) is configured to generate the parameter operation instruction based on at least one parameter operation request portion saved in the corresponding queue, and transmit the parameter operation instruction to a corresponding server end (1001).

4. The distributed system according to any one of claims 1-3, **characterized in that** the parameter server (1000) stores the key-value pair using a mapping data structure.

5. The distributed system according to any one of claims 1-4, **characterized in that** the parameter server (1000) stores the key-value pair in accordance with a data shard.

6. The distributed system according to any one of claims 1-5, **characterized in that** the server end (1001), the client (1002) and the computing device are in one-to-one correspondence, and the server end (1001), the client (1002) and the computing device in correspondence are integrated.

7. The distributed system according to any one of claims 1-6, **characterized in that** a separate handle is used for interaction between the client (1002) and a corresponding computing device for each algorithm.

8. A method of executing machine learning using a distributed system, comprising a parameter server (1000) of the distributed system that is configured to maintain parameters of a plurality of machine learning models, wherein the parameters have a form of a key-value pair ; and a plurality of computing devices (2000-1, 2000-2, ... , 2000-n) in the distributed system are configured to execute an algorithm regarding the plurality of machine learning models in parallel, wherein the algorithm is a training algorithm regarding the machine learning model or a prediction algorithm regarding the machine learning model, the method comprises: that
the parameter server (1000) provides the computing device with the parameters that the computing device needs to read in order to execute the training algorithm regarding the machine learning model, the computing device execute the training algorithm using the read parameters, and the parameter server (1000) updates the parameters of the machine learning model according to a result of executing the training algorithm by the computing device;
and/or, that
the parameter server (1000) provides the computing device with the parameters that the computing device needs to read in order to execute the prediction algorithm regarding the machine learning model, the computing device execute the prediction algorithm using the read parameters, wherein each of the plurality of machine learning models corresponds to a set of key-value pairs in which keys of different key-value pairs are different; and when the parameter server (1000) is saving the parameters of the plurality of machine learning models, the parameter server (1000) saves a plurality of key-value pairs having a same key in a form in which a single key corresponds to a plurality of values, so as to merge and save the plurality of key-value pairs corresponding to different machine learning models with the same key as a form in which a single key corresponds to a plurality of values.

9. The method according to claim 8, **characterized in that** the parameter server (1000) comprises at least one server end (1001) and a plurality of clients (1002-1, 1002-2, ... , 1002-n), wherein the client (1002) is in one-to-one correspondence with the computing device, and the client (1002) and the computing device in correspondence are integrated, wherein the computing device corresponding to the each client (1002) is configured to execute the algorithm regarding the at least one machine learning model, and the at least one server end (1001) is configured to save the parameters of the plurality of machine learning models; the method comprises:
each client (1002) receives parameter operation request for the parameters involved in the algorithm regarding at least one machine learning model from a corresponding computing device;
the each client (1002) communicates a parameter operation instruction of the parameters involved in the algorithm regarding at least one machine learning model with one or more server ends (1001-1, 1001-2, ... , 1001-n), wherein, in the parameter operation instruction, the same keys are compressed, or are merged, or are compressed and merged; and
the each client (1002) communicates a parameter operation result to the corresponding computing device .

10. The method according to any one of claims 8-9, **characterized in that**,
each client (1002) splits the parameter operation request of the corresponding computing device into parameter operation request portions corresponding to respective server end (1001) after receiving the parameter operation request, and saves the split respective portion in a corresponding queue; wherein, the corresponding queue is set for each server end (1001);
the each client (1002) generates the parameter operation instruction based on at least one parameter operation request portion saved in the corresponding queue, and transmits the parameter operation instruction to a corresponding server end (1001).

11. The method according to any one of claims 8-10, **characterized in that** a separate handle is used for interaction between the client (1002) and a corresponding computing device for each algorithm.

12. The method according to any one of claims 8-11, **characterized in that** the parameter server (1000) stores the key-value pair using a mapping data structure.

13. The method according to any one of claims 8-12, **characterized in that** the parameter server (1000) stores the key-value pair in accordance with a data shard.

14. The method according to any one of claims 8-13, **characterized in that** the server end (1001), the client (1002) and the computing device are in one-to-one correspondence, and the server end (1001), the client (1002) and the computing device in correspondence are integrated.

15. A computer-readable storage medium storing a computer program thereon, **characterized in that** the computer program, when executed by a parameter server (1000), implements the method according to any one of claims 8 to 14.

## Patentansprüche

1. Verteiltes System zum Durchführen von maschinellem Lernen, umfassend:
einen Parameterserver (1000) zum Verwalten von Parametern einer Vielzahl von maschinellen Lernmodellen, wobei die Parameter die Form eines Schlüsselwertpaars aufweisen, so dass jedes maschinelle Lernmodell einem Satz von Schlüsselwertpaaren entspricht, wodurch die Schlüssel verschiedener Schlüsselwertpaare in dem Satz von Schlüsselwertpaaren unterschiedlich sind,
wobei der Parameterserver (1000) eine Vielzahl von Schlüsselwertpaaren mit demselben Schlüssel in einer Form speichert, in der ein einzelner Schlüssel einer Vielzahl von Werten entspricht, wenn der Parameterserver (1000) Parameter der Vielzahl von maschinellen Lernmodellen speichert, wodurch die Vielzahl von Schlüsselwertpaaren mit dem gleichen Schlüssel werden, die verschiedenen maschinellen Lernmodellen entsprechen, kombiniert und in einer Form gespeichert, in der ein einzelner Schlüssel einer Vielzahl von Werten entspricht, und
eine Vielzahl von Berechnungsvorrichtungen (2000-1, 2000-2, ..., 2000-n), die konfiguriert sind, um Algorithmen in Bezug auf die Vielzahl von maschinellen Lernmodellen parallel auszuführen, wobei der Algorithmus ein Trainingsalgorithmus für ein maschinelles Lernmodell oder ein Vorhersagealgorithmus für ein maschinelles Lernmodell ist,
wobei der Parameterserver (1000) der Berechnungsvorrichtung diejenigen Parameter bereitstellt, welche diese lesen muss, um einen Trainingsalgorithmus für ein maschinelles Lernmodell auszuführen, so dass die Berechnungsvorrichtung den Trainingsalgorithmus unter Verwendung der gelesenen Parameter ausführt, und wobei der Parameterserver (1000) die Parameter des maschinellen Lernmodells basierend auf einem Ergebnis des Trainingsalgorithmus aktualisiert, der von der Berechnungsvorrichtung ausgeführt wird,
und/oder, wobei der Parameterserver (1000) der Berechnungsvorrichtung diejenigen Parameter bereitstellt, welche diese lesen muss, um einen Vorhersagealgorithmus für ein maschinelles Lernmodell auszuführen, so dass die Berechnungsvorrichtung den Vorhersagealgorithmus unter Verwendung der gelesenen Parameter ausführt.

2. Verteiltes System nach Anspruch 1, **dadurch gekennzeichnet, dass** der Parameterserver (1000) mindestens eine Serverseite (1001) und eine Vielzahl von Clients (1002-1, 1002-2, ..., 1002-n) umfasst, wobei der Client (1002) eins zu eins mit der Berechnungsvorrichtung übereinstimmt, und wobei der entsprechende Client (1002) und die übereinstimmende Berechnungsvorrichtung integriert sind,
wobei die mindestens eine Serverseite (1001) zum Speichern von Parametern der Vielzahl von maschinellen Lernmodellen verwendet wird, wobei jeder der Clients (1002) verwendet wird, um Parameteroperationsbefehle für Parameter zu übertragen, die an einem Algorithmus für mindestens ein maschinelles Lernmodell zwischen einem oder mehreren Serverseiten (1001-1, 1001-2, ..., 1001-n) beteiligt sind, wobei die Berechnungsvorrichtung, die jedem der Clients (1002) entspricht, konfiguriert ist, um einen Algorithmus für das mindestens eine maschinelle Lernmodell auszuführen,
wobei die gleichen Schlüssel in dem Parameteroperationsbefehl komprimiert und/oder kombiniert werden.

3. Verteiltes System nach einem der Ansprüche 1-2, **dadurch gekennzeichnet, dass** jeder der Clients (1002) konfiguriert ist, um eine Parameteroperationsanfrage einer entsprechenden Berechnungsvorrichtung nach Erhalt der Parameteroperationsanfrage in Parameteroperations-Anfrageteile aufzuspalten, und die jeweiligen aufgespaltenen Teile in einer entsprechenden Warteschlange zu speichern, wobei die entsprechende Warteschlange für jede Serverseite (1001) festgelegt ist;
dass jeder der Clients (1002) konfiguriert ist, die Parameteroperationsbefehle auf Basis mindestens eines in der Warteschlange gespeicherten Parameteroperation-Anfrageteils zu erstellen, und den Parameteroperationsbefehl an eine entsprechende Serverseite (1001) zu übermitteln.

4. Verteiltes System nach einem der Ansprüche 1-3, **dadurch gekennzeichnet, dass** der Parameterserver (1000) eine Zuordnungsdatenstruktur verwendet, um Schlüsselwertpaare zu speichern.

5. Verteiltes System nach einem der Ansprüche 1-4, **dadurch gekennzeichnet, dass** der Parameterserver (1000) Schlüsselwertpaare gemäß einer Datenfragmentierung speichert.

6. Verteiltes System nach einem der Ansprüche 1-5, **dadurch gekennzeichnet, dass** die Serverseite (1001), der Client (1002) und die Berechnungsvorrichtung eins zu eins übereinstimmen, und die entsprechende Serverseite (1001), der Client (1002) und die Berechnungsvorrichtung integriert sind.

7. Verteiltes System nach einem der Ansprüche 1-6, **dadurch gekennzeichnet, dass** ein separates Handle für jeden Algorithmus zwischen dem Client (1002) und der entsprechenden Berechnungsvorrichtung verwendet wird, um zu interagieren.

8. Verfahren zum Durchführen von maschinellem Lernen unter Verwendung eines verteilten Systems, umfassend einen Parameterserver (1000) in dem verteilten System, welcher verwendet wird, um die Parameter einer Vielzahl von maschinellen Lernmodellen zu verwalten, wobei die Parameter die Form eines Schlüsselwertpaars aufweisen, wobei eine Vielzahl von Berechnungsvorrichtungen (2000-1, 2000-2, ..., 2000-n) in dem verteilten System konfiguriert ist, um Algorithmen in Bezug auf die Vielzahl von maschinellen Lernmodellen parallel auszuführen, wobei der Algorithmus ein Trainingsalgorithmus für ein maschinelles Lernmodell oder ein Vorhersagealgorithmus für ein maschinelles Lernmodell ist, wobei das Verfahren umfasst, dass
der Parameterserver (1000) der Berechnungsvorrichtung diejenigen Parameter bereitstellt, welche diese lesen muss, um einen Trainingsalgorithmus für ein maschinelles Lernmodell auszuführen, so dass die Berechnungsvorrichtung den Trainingsalgorithmus unter Verwendung der gelesenen Parameter ausführt, und wobei der Parameterserver (1000) die Parameter des maschinellen Lernmodells basierend auf einem Ergebnis des Trainingsalgorithmus aktualisiert, der von der Berechnungsvorrichtung ausgeführt wird,
und/oder, dass der Parameterserver der Berechnungsvorrichtung diejenigen Parameter bereitstellt, welche diese lesen muss, um einen Vorhersagealgorithmus für das maschinelles Lernmodell auszuführen, so dass die Berechnungsvorrichtung den Vorhersagealgorithmus unter Verwendung der gelesenen Parameter ausführt, wobei jedes der Vielzahl von maschinellen Lernmodellen einem Satz von Schlüsselwertpaaren entspricht, wodurch die Schlüssel verschiedener Schlüsselwertpaare in dem Satz von Schlüsselwertpaaren unterschiedlich sind, wobei der Parameterserver (1000) eine Vielzahl von Schlüsselwertpaaren mit demselben Schlüssel in einer Form speichert, in der ein einzelner Schlüssel einer Vielzahl von Werten entspricht, wenn der Parameterserver (1000) die Parameter der Vielzahl von maschinellen Lernmodellen speichert, wodurch die Vielzahl von Schlüsselwertpaaren, die verschiedenen maschinellen Lernmodellen entsprechen, mit dem gleichen Schlüssel kombiniert und in einer Form gespeichert werden, in der ein einzelner Schlüssel einer Vielzahl von Werten entspricht.

9. Verfahren nach Anspruch 8, **dadurch gekennzeichnet, dass** der Parameterserver (1000) mindestens eine Serverseite (1001) und eine Vielzahl von Clients (1002-1, 1002-2, ... , 1002-n) umfasst, wobei der Client(1002) eins zu eins mit der Berechnungsvorrichtung übereinstimmt, und wobei der entsprechende Client (1002) und die Berechnungsvorrichtung integriert sind,
wobei die jedem Client (1002) entsprechende Berechnungsvorrichtung konfiguriert ist, um den Algorithmus in Bezug auf das mindestens eine maschinelle Lernmodell auszuführen, und wobei mindestens eine Serverseite (1001) zum Speichern von Parametern der Vielzahl von maschinellen Lernmodellen verwendet wird, wobei das Verfahren folgende Schritte umfasst:
jeder der Clients (1002) erhält von einer entsprechenden Berechnungsvorrichtung eine Parameteroperationsanfrage für die in dem Algorithmus enthaltenen Parameter in Bezug auf mindestens ein maschinelles Lernmodell;
jeder dieser Clients (1002) übermittelt einen Parameteroperationsbefehl für die in dem Algorithmus enthaltenen Parameter in Bezug auf mindestens ein maschinelles Lernmodell an ein oder mehrere Serverseiten (1001-1, 1001-2, ... , 1001-n),
wobei in dem Parameteroperationsbefehl die gleichen Schlüssel komprimiert und/oder kombiniert werden, und
jeder dieser Clients (1002) übermittelt ein Ergebnis der Parameteroperation an die entsprechende Berechnungsvorrichtung.

10. Verfahren nach einem der Ansprüche 8-9, **dadurch gekennzeichnet, dass** jeder der Clients (1002) die Parameteroperationsanfrage einer entsprechenden Berechnungsvorrichtung nach Erhalt der Parameteroperationsanfrage in Parameteroperations-Anfrageteile aufspaltet, welche einer entsprechenden Serverseite (1001) zugeordnet sind, und den jeweils aufgespaltenen Teil in einer entsprechenden Warteschlange speichert, wobei die entsprechende Warteschlange für jede Serverseite (1001) festgelegt ist;
dass jeder der Clients (1002) die Parameteroperationsbefehle auf Basis mindestens eines in der Warteschlange gespeicherten Parameteroperation-Anfrageteils erstellt, und den Parameteroperationsbefehl an eine entsprechende Serverseite (1001) übermittelt.

11. Verfahren nach einem der Ansprüche 8-10, **dadurch gekennzeichnet, dass** ein separates Handle für jeden Algorithmus zwischen dem Client und der entsprechenden Berechnungsvorrichtung verwendet wird, um zu interagieren.

12. Verfahren nach einem der Ansprüche 8-11, **dadurch gekennzeichnet, dass** der Parameterserver (1000) eine Zuordnungsdatenstruktur verwendet, um Schlüsselwertpaare zu speichern.

13. Verfahren nach einem der Ansprüche 8-12, **dadurch gekennzeichnet, dass** der Parameterserver (1000) Schlüsselwertpaare gemäß einer Datenfragmentierung speichert.

14. Verfahren nach einem der Ansprüche 8-13, **dadurch gekennzeichnet, dass** die Serverseite (1001), der Client (1002) und die Berechnungsvorrichtung eins zu eins übereinstimmen, und wobei die entsprechende Serverseite (1001), der Client (1002) und die Berechnungsvorrichtung integriert sind.

15. Computerlesbares Speichermedium, auf dem ein Computerprogramm gespeichert ist, **dadurch gekennzeichnet, dass** das Computerprogramm, wenn es von einem Parameterserver (1000) ausgeführt wird, das Verfahren nach einem der Ansprüche 8 bis 14 implementiert.

## Revendications

1. Un système distribué pour effectuer un apprentissage machine comprenant:
un serveur de paramètres (1000) pour maintenir les paramètres d'une pluralité de modèles d'apprentissage machine, dans lequel lesdits paramètres ont la forme de paires clé-valeur ; chaque modèle d'apprentissage machine correspond à un ensemble de paires clé-valeur dans lequel les clés des différentes paires clé-valeur sont différentes ; ledit serveur de paramètres (1000), lorsqu'il sauvegarde les paramètres de ladite pluralité de modèles d'apprentissage machine, sauvegarde une pluralité de paires clé-valeur avec la même clé sous la forme d'une clé unique correspondant à une pluralité de valeurs, pour combiner et enregistrer ladite pluralité de paires clé-valeur avec la même clé correspondant respectivement à différents modèles d'apprentissage machine sous la forme d'une clé unique correspondant à multiples valeurs ; et
plusieurs dispositifs informatiques (2000-1, 2000-2, ..., 2000-n) configurés pour exécuter, en parallèle, des algorithmes concernant ladite pluralité de modèles d'apprentissage machine, dans lequel lesdits algorithmes sont des algorithmes d'apprentissage concernant les modèles d'apprentissage machine ou des algorithmes de prédiction concernant les modèles d'apprentissage machine;
dans lequel ledit serveur de paramètres (1000) fournit audit dispositif informatique des paramètres que le dispositif informatique doit lire afin d'exécuter l'algorithme d'apprentissage concernant le modèle d'apprentissage machine, de sorte que ledit dispositif informatique utilise les paramètres lus pour exécuter ledit algorithme d'apprentissage, et en plus, ledit serveur de paramètres (1000) met à jour lesdits paramètres dudit modèle d'apprentissage machine en fonction des résultats de l'exécution dudit algorithme d'apprentissage par ledit dispositif informatique;
et/ou ledit serveur de paramètres (1000) fournit audit dispositif informatique des paramètres que le dispositif informatique doit lire afin d'exécuter l'algorithme de prédiction concernant le modèle d'apprentissage machine, de sorte que ledit dispositif informatique utilise les paramètres lus pour exécuter ledit algorithme de prédiction.

2. Système distribué selon la revendication 1, **caractérisé en ce que** ledit serveur de paramètres (1000) comprend au moins un côté serveur (1001) et une pluralité de clients (1002-1, 1002-2, ..., 1002-n), dans lequel le client (1002) et le dispositif informatique correspondent un à un, et en plus le client (1002) et le dispositif informatique correspondants sont intégrés,
dans lequel ledit au moins un côté serveur (1001) est utilisé pour enregistrer les paramètres de ladite pluralité de modèles d'apprentissage machine; chaque client (1002) est utilisé pour transmettre les instructions d'opération de paramètres des paramètres impliqués dans l'algorithme concernant au moins un modèle d'apprentissage machine avec un ou une pluralité de côté serveurs (1001-1, 1001-2, ..., 1001-n), dans lequel le dispositif informatique correspondant à chacun desdits clients (1002) est configuré pour exécuter l'algorithme concernant ledit au moins un modèle d'apprentissage machine,
dans lequel les mêmes clés sont comprimées et/ou combinées dans lesdites instructions d'opération de paramètres.

3. Système distribué selon l'une quelconque des revendications 1-2, **caractérisé en ce**
**que** chaque client (1002) est configuré pour diviser une demande d'opération de paramètre d'un dispositif informatique correspondant en parties de demande d'opération de paramètre correspondant à un côté serveur respectif (1001) après avoir reçu la demande d'opération de paramètre, et sauvegarder la partie respective divisée dans une file d'attente correspondante ; dans lequel, la file d'attente correspondante est établie pour chaque côté serveur (1001) ;
**que** chaque client (1002) est configuré pour générer l'instruction d'opération de paramètre sur la base d'au moins une partie de demande d'opération de paramètre sauvegardée dans la file d'attente correspondante, et transmettre l'instruction d'opération de paramètre à un côté serveur correspondant (1001).

4. Système distribué selon l'une quelconque des revendications 1 à 3, **caractérisé en ce que** ledit serveur de paramètres (1000) utilise une structure de données de mappage pour enregistrer les paires clé-valeur.

5. Système distribué selon l'une quelconque des revendications 1 à 4, **caractérisé en ce que** ledit serveur de paramètres (1000) enregistre les paires clé-valeur selon une tranche de données.

6. Système distribué selon l'une quelconque des revendications 1 à 5, **caractérisé en ce que** ledit côté serveur (1001), le client (1002) et le dispositif informatique correspondent un à un, et en plus, ledit côté serveur (1001), le client (1002) et le dispositif informatique correspondants sont intégrés.

7. Système distribué selon l'une quelconque des revendications 1 à 6, **caractérisé en ce qu'**un handle distinct est utilisé pour interagir entre le client (1002) et le dispositif informatique correspondant pour chaque algorithme.

8. Procédé utilisant un système distribué pour effectuer un apprentissage machine, comprenant un serveur de paramètres (1000) dudit système distribué qui est utilisé pour maintenir les paramètres d'une pluralité de modèles d'apprentissage machine, dans lequel lesdits paramètres ont la forme de paires clé-valeur ; plusieurs dispositifs informatiques (2000-1, 2000-2, ..., 2000-n) dudit système distribué sont configurés pour exécuter, en parallèle, des algorithmes concernant de ladite pluralité de modèles d'apprentissage machine, dans lequel lesdits algorithmes sont des algorithmes d'apprentissage concernant les modèles d'apprentissage machine ou des algorithmes de prédiction concernant les modèles d'apprentissage machine; ledit procédé comprenant:
que ledit serveur de paramètres (1000) fournit audit dispositif informatique des paramètres que le dispositif informatique doit lire afin d'exécuter l'algorithme d'apprentissage concernant le modèle d'apprentissage machine, de sorte que ledit dispositif informatique utilise les paramètres lus pour exécuter ledit algorithme d'apprentissage, ledit serveur de paramètres (1000) met à jour lesdits paramètres dudit modèle d'apprentissage machine en fonction des résultats de l'exécution dudit algorithme d'apprentissage par ledit dispositif informatique;
et/ou que ledit serveur de paramètres (1000) fournit audit dispositif informatique des paramètres que le dispositif informatique doit lire afin d'exécuter l'algorithme de prédiction concernant le modèle d'apprentissage machine, de sorte que ledit dispositif informatique utilise les paramètres lus pour exécuter ledit algorithme de prédiction, dans lequel chaque modèle d'apprentissage machine de ladite pluralité de modèles d'apprentissage machine correspond à un ensemble de paires clé-valeur dans lequel les clés des différentes paires clé-valeur sont différentes; ledit serveur de paramètres (1000), lorsqu'il sauvegarde les paramètres de ladite pluralité de modèles d'apprentissage machine, sauvegarde une pluralité de paires clé-valeur avec la même clé sous la forme d'une clé unique correspondant à une pluralité de valeurs, pour combiner et enregistrer ladite pluralité de paires clé-valeur avec la même clé correspondant respectivement à différents modèles d'apprentissage machine sous la forme d'une clé unique correspondant à multiples valeurs.

9. Procédé selon la revendication 8, **caractérisé en ce que** ledit serveur de paramètres (1000) comprend au moins un côté serveur (1001) et une pluralité de clients (1002-1, 1002-2, ... 1002-n), dans lequel les clients correspondent un-à-un au dispositif informatique, et en plus le client (1002) correspondant et le dispositif informatique sont intégrés,
dans lequel ledit dispositif informatique correspondant à chaque client (1002) est configuré pour exécuter l'algorithme concernant ledit au moins un modèle d'apprentissage machine,
et dans lequel ledit au moins un côté serveur (1001) est utilisé pour enregistrer les paramètres de ladite pluralité de modèles d'apprentissage machine; le procédé comprenant les étapes suivantes :
chaque client (1002) reçoit une demande d'opération de paramètres pour les paramètres impliqués dans l'algorithme concernant au moins un modèle d'apprentissage machine depuis un dispositif informatique correspondant ;
chaque client (1002) communique une instruction d'opération de paramètre des paramètres impliqués dans l'algorithme concernant au moins un modèle d'apprentissage machine avec une ou plusieurs côtés serveur (1001-1, 1001-2, ..., 1001-n), dans lequel, dans l'instruction d'opération de paramètre, les mêmes clés sont comprimées et/ou sont combinées et chaque client (1002) communique un résultat d'opération de paramètre au dispositif informatique correspondant.

10. Procédé selon l'une quelconque des revendications 8 à 9, **caractérisé en ce que** chaque client (1002) divise la demande d'opération de paramètre du dispositif informatique correspondant en parties de demande d'opération de paramètre correspondant à un côté serveur respectif (1001) ;
chaque client (1002) génère l'instruction d'opération de paramètre sur la base d'au moins une partie de demande d'opération de paramètre sauvegardée dans la file d'attente correspondante, et transmet l'instruction d'opération de paramètre à un côté serveur correspondant (1001).

11. Système distribué selon l'une quelconque des revendications 8 à 10, **caractérisé en ce qu'**un handle distinct est utilisé pour interagir entre le client et le dispositif informatique correspondant pour chaque algorithme.

12. Système distribué selon l'une quelconque des revendications 8 à 11, **caractérisé en ce que** ledit serveur de paramètres (1000) utilise une structure de données de mappage pour enregistrer les paires clé-valeur.

13. Système distribué selon l'une quelconque des revendications 8 à 12, **caractérisé en ce que** ledit serveur de paramètres (1000) enregistre les paires clé-valeur selon une tranche de données.

14. Système distribué selon l'une quelconque des revendications 8 à 13, **caractérisé en ce que** le côté serveur (1001), le client (1002) et le dispositif informatique correspondent un à un, en plus, le côté serveur (1001), le client (1002) et le dispositif informatique correspondants sont intégrés.

15. Support de mémorisation lisible par ordinateur mémorisant un programme informatique, **caractérisé en ce que** le programme informatique, lorsqu'il est exécuté par un serveur de paramètres (1000), met en oeuvre le procédé selon l'une quelconque des revendications 8 à 14.
